# EUROPÄISCHE PATENTSCHRIFT

(11) **EP 1 781 912 B1**
(45) Veröffentlichungstag und Bekanntmachung des Hinweises auf die Patenterteilung: **20.08.2008**
(21) Anmeldenummer: 05756005.4
(22) Anmeldetag: 22.06.2005
(51) Int. Cl.: F02B 67/06, F16D 41/04, F16D 43/14, F16F 15/10

(54) **VORRICHTUNG ZUR DÄMPFUNG VON DREHSCHWINGUNGEN**
DEVICE FOR DAMPING ROTARY OSCILLATIONS
DISPOSITIF POUR AMORTIR DES VIBRATIONS TORSIONNELLES

(30) Priorität: 24.08.2004 DE 102004040810
(43) Veröffentlichungstag der Anmeldung: 09.05.2007
(73) Patentinhaber: Schaeffler KG, 91074 Herzogenaurach (DE)
(72) Erfinder: WIESNETH, Bernhard, 91054 Erlangen (DE); HOCHMUTH, Harald, 91469 Hagenbüchach (DE); ZERNICKEL, Alexander, 91074 Herzogenaurach (DE); WILHELM, Sigurd, 91074 Herzogenaurach (DE)
(86) Internationale Anmeldenummer: PCT/EP2005/006739
(87) Internationale Veröffentlichungsnummer: WO 2006/021254

(56) Entgegenhaltungen:
- DE-A1- 4 434 324
- DE-A1- 10 253 495
- DE-A1- 19 511 188
- DE-B- 1 073 806

## Beschreibung

### Gebiet der Erfindung

Die Erfindung betrifft eine Vorrichtung zur Dämpfung von Drehschwingungen in einem Antriebsstrang, insbesondere in einem Zugmitteltrieb einer Hubkolbenbrennkraftmaschine für deren Zusatzaggregate, mit einer Freilaufkupplung, die zwischen einer Riemenscheibe und einer Nabe angeordnet ist, wobei die Nabe mit einer Eingangswelle eines Zusatzaggregats und die Riemenscheibe über ein Zugmittel mit einer Kurbelwelle verbunden sind, und wobei die Freilaufkupplung einen die Nabe umgebenden und an dieser befestigten Innenring und einen den Innenring mit radialem Spiel umgebenden, an der Riemenscheibe befestigten Außenring aufweist.

### Hintergrund der Erfindung

Bedingt durch die zunehmenden Bestrebungen der Automobilindustrie, den durchschnittlichen Treibstoffverbrauch zu reduzieren, wird bei einer Brennkraftmaschine beispielsweise ein riemengetriebener Starter-Generator verwendet. Diese neuartige Technologie kommt vorzugsweise in Kombination mit Benzin- oder Dieselmotoren mit Direkteinspritzung zum Einsatz. Aufgrund der ungünstigen Triebwerksdynamik, die derartige Motoren aufweisen, liegt der Wunsch nahe, einen Zugmitteltrieb mit einer Generator-Freilauf-Riemenscheibe (OAP, Overrunning Alternator Pulley) einsetzen zu können. Dabei soll die bewährte Arbeitsweise eines Generatorfreilaufs genutzt werden.

Ein solcher mit einer Riemenscheibe kombinierter Freilauf ist beispielsweise aus der Druckschrift DE 195 11 188 A1 bekannt. Ein derartiger Freilauf überträgt die von der Kurbelwelle generierten Momente des Zugmitteltriebs auf eine Eingangswelle des Nebenaggregats. Die Freilauf-Riemenscheibe mindert die von der Kurbelwelle herrührenden Ungleichförmigkeiten, indem sie teilweise "durchrutscht". Dieses Verhalten ist bei Verwendung eines Starters als Nebenaggregat unerwünscht. Dieser stellt insofern ein besonderes Nebenaggregat dar, als die Momentenübertragung umgekehrt vom Nebenaggregat auf die Kurbelwelle erfolgt. Es ist daher erforderlich, in der Startphase den Generator drehfest mit der Riemenscheibe zu verbinden.

Andererseits ist es nach der Startphase für ein optimales Funktionieren des Generators notwendig, für diesen einen möglichst gleichförmigen Antrieb bereitzustellen, was über einen Freilauf geschehen kann. Die in der DE 44 34 324 vorgestellte Lösung, eine hydrostatische Kupplung zu verwenden, um Nebenaggregate in eine Antriebseinheit einzukoppeln, scheidet aus, da in der Startphase nicht notwendigerweise ein hydraulischer Druck vorherrschen muss.

### Aufgabe der Erfindung

Der Erfindung liegt deshalb die Aufgabe zugrunde, die Startfähigkeit der Brennkraftmaschine über den Generator zu ermöglichen. Zu diesem Zweck soll in der Generator-Freilauf-Riemenscheibe ein Startmechanismus integriert werden, welcher nach einem Startvorgang in Abhängigkeit von der Drehzahl die Startfunktion von der Riemenscheibe selbsttätig abkoppelt.

### Beschreibung der Erfindung

Diese Aufgabe wird erfindungsgemäß nach dem kennzeichnenden Teil des Patentanspruch 1 dadurch gelöst, dass zwischen der Riemenscheibe und der Nabe eine Freilaufkupplung angeordnet ist, die einen die Nabe umgebenden und an dieser befestigten Innenring und einen den Innenring mit radialem Spiel umgebenden, an der Riemenscheibe befestigten Außenring aufweist. Dabei sind im Innenring mindestens ein fliehkraftabhängig betätigtes Verriegelungselement und im Außenring mindestens eine Verriegelungsaufnahme angeordnet.

Unterhalb einer bestimmten Grenzdrehzahl, also im Stillstand sowie bei niedriger Motordrehzahl, greift das Verriegelungselement in die Verriegelungsaufnahme. Damit sind die Riemenscheibe und die Nabe, die mit der Eingangswelle des Generators verbunden ist, verriegelt, so dass das Zusatzaggregat Generator als Starter benutzt werden kann. Während des Starts wird das Drehmoment von der Eingangswelle des Zusatzaggregats in den Innenring eingeleitet und über die formschlüssige Verriegelung auf den Außenring und dann über die Riemenscheibe auf einen mit der Kurbelwelle verbundenen Riemen übertragen: Die Brennkraftmaschine kann somit gestartet werden.

Bei höheren Drehzahlen verlassen die Verriegelungselemente fliehkraftbedingt die Verriegelungsaufnahmen des Außenrings und geben diesen gegenüber dem Innenring mit der Nabe frei. In diesem Fall wirkt zwischen der Nabe und der Riemenscheibe nur die Freilaufkupplung, und das Zusatzaggregat kann als Generator benutzt werden. Die Riemenscheibe kann ihre normale Funktion bei abgekoppelter Generatormasse erfüllen. Die Erfindung ermöglicht somit den Einsatz eines Starter-Generators im Riementrieb einer Brennkraftmaschine.

Ein wesentlicher Vorteil der Erfindung ist die Anordnung des Verriegelungselements am Innenring. Beim Abstellen der Brennkraftmaschine bleibt das Verriegelungselement bei nicht mehr rotierendem Außenring und einem immer noch durch die nachlaufende Eingangswelle rotierenden Innenring in seiner Position, bis die Drehzahl des Innenrings unter die vorbestimmte Grenzdrehzahl fällt. Dann ist auch die Geschwindigkeitsdifferenz zwischen Innen- und Außenring so klein, dass das Verriegelungselement sicher und schnell verrasten kann. Bei einer Anordnung des Verriegelungselements am Außenring hingegen wäre das Einrasten so lange unterbunden, wie der Innenring sich zu schnell dreht. Dies macht sich einerseits durch unerwünschte, schnell aufeinanderfolgende, klackende Rastgeräusche bemerkbar, andererseits schädigt dieser Vorgang das Material.

Besonders vorteilhaft ist eine Ausbildung von mehreren Verriegelungsaufnahmen am Außenring. Dadurch kann der notwendige Verdrehwinkel zwischen Innenring und Außenring möglichst klein gehalten werden. Befinden sich mehrere Verriegelungselemente am Innenring, so ist es besonders zweckmäßig, eine Verzahnung am Außenring als Verriegelungsaufnahmen auszubilden, wobei deren Zahnzahl ein ganzzahliges Vielfaches der Verriegelungselementanzahl ist. Dadurch können alle Verriegelungselemente gleichzeitig verrasten, was die Belastungen reduziert und die Zeit des Einrastens weiter verkürzt.

Der Einsatzbereich der erfindungsgemäßen Vorrichtung ist nicht auf einen Starter-Generator beschränkt. Diese kann vielmehr überall dort in einen Antriebsstrang eingesetzt werden, wo Vorrichtungen zur Dämpfung von Drehschwingungen nach dem Stand der Technik angeordnet sind.

Zusammenfassend ergibt sich, dass die erfindungsgemäße Vorrichtung den Starter eines Starter-Generators bei Erreichen einer Grenzdrehzahl zuverlässig koppelt und entkoppelt bei gleichzeitiger Minimierung der Geräuschemission und des Materialverschleißes.

### Kurze Beschreibung der Zeichnungen

Die Erfindung wird nachfolgend anhand eines besonders vorteilhaften Ausführungsbeispiels näher erläutert und in den dazugehörigen Zeichnungen dargestellt. Es zeigen:
- Figur 1: einen Längsschnitt einer Vorrichtung zur Dämpfung von Drehschwingungen nach dem Stand der Technik
- Figur 2: einen Längsschnitt einer erfindungsgemäßen Vorrichtung zur Dämpfung von Drehschwingungen
- Figur 3a: einen Querschnitt der erfindungsgemäßen Vorrichtung entlang der Schnittlinie III-III vor dem Startvorgang der Brennkraftmaschine
- Figur 3b: einen Querschnitt der erfindungsgemäßen Vorrichtung entlang der Schnittlinie III-III nach dem Startvorgang der Brennkraftmaschine
- Figur 4: einen Querschnitt einer weiteren erfindungsgemäßen Vorrichtung vor dem Startvorgang der Brennkraftmaschine

### Ausführliche Beschreibung der Zeichnungen

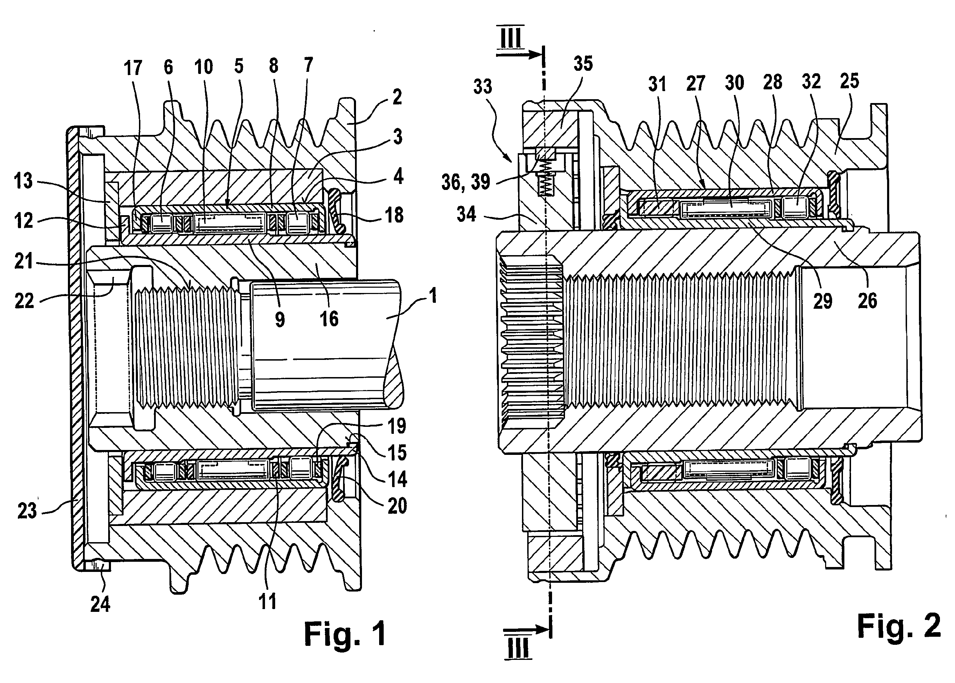

Eine in Figur 1 dargestellte vorbekannte Vorrichtung zur Dämpfung von Drehschwingungen umgibt eine Eingangswelle 1 eines nicht dargestellten Nebenaggregats. Die Eingangswelle 1 wird über eine Riemenscheibe 2 und ein nicht näher dargestelltes Zugmittel von einer Abtriebsscheibe angetrieben, die mit der Kurbelwelle einer Brennkraftmaschine verbunden ist. Die Riemenscheibe 2 weist in ihrem Inneren einen Armierungsring 3 auf. In einer Bohrung 4 dieses Rings ist eine aus einer Freilaufkupplung 5 und zwei Zylinderrollenlagern 6 und 7 bestehende Baueinheit eingesetzt. Dabei sind für die Baueinheit ein gemeinsamer Lageraußenring 8 und ein gemeinsamer Lagerinnenring 9 vorgesehen. Der Lagerinnenring 9 weist mehrere, am Umfang verteilt angeordnete, nicht näher dargestellte Klemmrampen auf, die mit einer entsprechenden Anzahl von Klemmrollen 10 zusammenwirken. Dabei sind die Klemmrollen in einem Käfig 11 geführt und mittels nicht näher dargestellter Federn gegenüber dem Klemmrampen vorgespannt. Der Lageraußenring 8 ist im wesentlichen hülsenförmig ausgebildet und hat über seine gesamte Länge einen gleichbleibenden Innendurchmesser, wobei er Laufbahnen für die Zylinderrollenlager 6 und 7 sowie die Klemmrollen 10 bildet.

Der Lagerinnenring 9 ist an seinem von dem Nebenaggregat abgewandten Ende mit einem radial nach außen gerichteten Bord 12 versehen, der sich stirnseitig an einer Anlaufscheibe 13 abstützt, welche im Armierungsring 3 fixiert ist. An seinem anderen axialen Ende weist der Lagerinnenring 9 eine Schulter 14 auf, die beispielsweise zahnartig ausgebildet ist und in einzelne Längsnuten 15 eingreift, die wiederum Bestandteil einer Nabe 16 sind. An seinem einen Ende hat der Lageraußenring 8 einen ersten Bord 17, der von dem Bord 12 des Lagerinnenringes 9 hintergriffen wird. Ein zweiter Bord 18 des Lageraußenringes 8, der an dessen dem Zusatzaggregat zugewandtem Ende vorgesehen ist, hintergreift einen Käfig 19 des Zylinderrollenlagers 7. Diesem zweiten Bord 18 benachbart ist ein Radialdichtring 20 angeordnet, der in die Riemenscheibe 2 eingesetzt ist und eine schleifende Dichtung mit dem Lagerinnenring 9 bildet. Zum Zwecke der Befestigung der Nabe 16 auf der Eingangswelle 1 weist die Nabe 16 ein Innengewinde 21 auf, wobei im Inneren der Nabe 16 mit Abstand zu diesem Innengewinde 21 ein als Kerbverzahnung ausgebildetes Vielzahnprofil 22 für einen Angriff eines Montagewerkzeugs vorgesehen ist. Die Riemenscheibe 2 ist an ihrem von dem Zusatzaggregat abgewandten Ende mittels eines Deckels 23 verschlossen, welcher einen axial vorstehenden Rand 24 aufweist. Dieser ist am Umfang der Riemenscheibe 2 eingeschnappt.

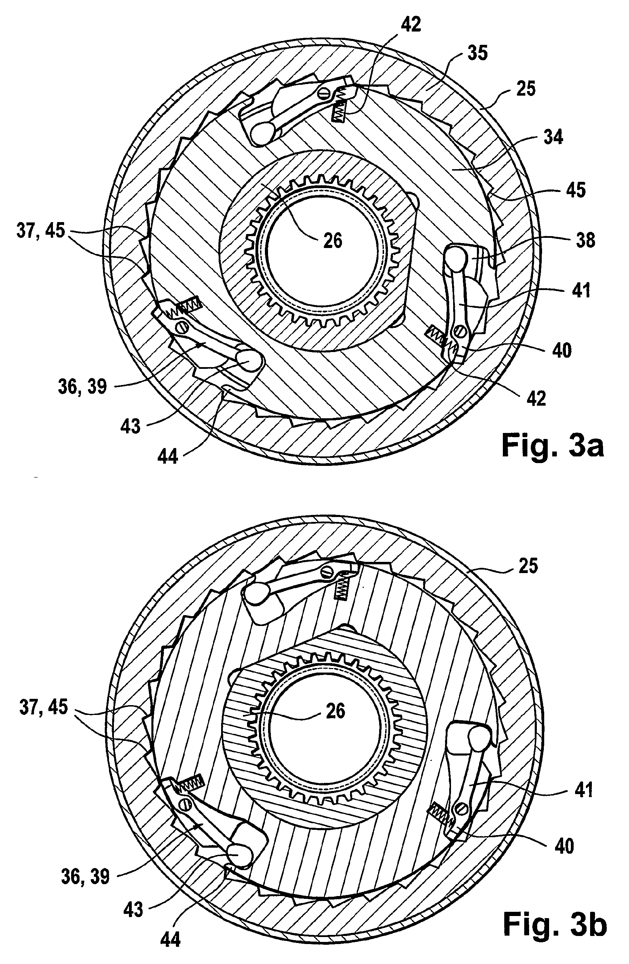

Eine in den Figuren 2, 3a und 3b dargestellte, erfindungsgemäße Vorrichtung ist im Wesentlichen ebenso aufgebaut, wie die in Figur 1 dargestellte Vorrichtung. Sie unterscheidet sich von dieser jedoch dadurch, dass zwischen ihrer Riemenscheibe 25 und ihrer Nabe 26 zusätzlich zu der Baueinheit bestehend aus einer Freilaufkupplung 27 mit einem Lageraußenring 28, einem Lagerinnenring 29, Klemmrollen 30 und Wälzlagern 31 und 32 eine Fliehkraftkupplung 33 angeordnet ist. Diese besteht aus einem Innenring 34 mit einem Verriegelungselement 36 und einem Außenring 35 mit Verriegelungsaufnahmen 37.

Der Innenring 34 ist auf die Nabe 26 von einem stirnseitigen Ende aus aufgesteckt und mit dieser fest verbunden. Er enthält mehrere, von seiner äußeren Oberfläche ausgehende Ausnehmungen 38, in die in Umfangsrichtung die Verriegelungselemente 36 angeordnet sind. Es ist besonders zweckmäßig, die Ausnehmungen 38 in gleichmäßigen Abständen am Innenring 34 anzuordnen. Der Außenring 35 umgibt den Innenring 34 konzentrisch mit einem radialen Spiel. Er ist in einer ringförmigen konzentrischen Aushöhlung der Riemenscheibe 25 von einer Stirnseite aus eingesetzt und an der Riemenscheibe 25 befestigt.

Die Verriegelungselemente 36 sind als Klinken 39 ausgebildet. Die Lagerung der Klinken ist dabei derart ausgebildet, dass bei rotierendem Innenring 34 das eine Ende der Klinke nach radial außen und das andere Ende nach radial innen ausgelenkt werden. Dazu dürfen Massenschwerpunkt und Drehpunkt nicht übereinstimmen. Bei einer symmetrisch geformten Klinke aus homogenem Material ist das durch eine asymmetrische Anlenkung der Klinken 39 möglich. Dadurch weisen sie einen kurzen Hebel 40 und einen langen Hebel 41 auf, wobei auf den kurzen Hebel 40 ein Federelement 42 nach radial außen wirkt. Auf dem langen Hebel 41 kann zur Verstärkung der Fliehkraft eine Zusatzmasse 43 befestigt sein.

Im Ruhezustand der Vorrichtung (Figur 3a) befinden sich die langen Hebel 41 durch den Federdruck in den Ausnehmungen 38 radial weitest möglich innen. Gleichzeitig wird auf die kurzen Hebel 40 durch das Federelement 42 eine nach außen gerichtete Kraft ausgeübt, so dass die kurzen Hebel 40 sich in den für sie vorgesehenen Verriegelungsaufnahmen 37 befinden. Die Verriegelungsaufnahmen 37 lassen sich besonders einfach als Zähne 45 realisieren. Sind diese Zähne 45 über den Umfang des Außenrings 35 gleichmäßig verteilt und bildet ihre Anzahl ein ganzzahliges Vielfaches der Anzahl der Verriegelungselemente 37, so können alle Verriegelungselemente 37 gleichzeitig in die Zähne 45 eingreifen. Dadurch wird es möglich, größere Kräfte zu übertragen.

Die erfindungsgemäße Vorrichtung arbeitet wie folgt: Während des Starts der Brennkraftmaschine wird ein Drehmoment von der Eingangswelle über die Nabe 26 in den mit den mit den Klinken 39 versehenen Innenring 34 eingeleitet. Dieses Startmoment wird mittels der Klinken 39 auf den formschlüssig in der Riemenscheibe 25 sitzenden Außenring 35 übertragen. Die Brennkraftmaschine wird über ein die Riemenscheibe 25 umgebendes Zugmittel gestartet.

Dreht nun der Innenring mit einer Drehzahl oberhalbl der Grenzdrehzahl, wirkt auf die langen Hebel 41 eine höhere Zentrifugalkraft als auf die kurzen Hebel 40. Die Zentrifugalkraft wirkt also der Federkraft entgegen. Die Federkonstante des Federelements 42 ist so beschaffen, dass sich die auf die Klinke 39 von der Feder ausgeübte Kraft und die Zentrifugalkraft bei der Grenzdrehzahl kompensieren. Steigt die Drehzahl weiter an, überkompensiert die Zentrifugalkraft die Federkraft, und das lange Ende 41 der Klinke bewegt sich nach außen, während das kurze Ende 40 sich nach radial innen bewegt. Dadurch erfolgt eine Entriegelung der Fliehkraftkupplung 33 (Figur 3b), der Innenring 34 gelangt mit dem Außenring 34 außer Eingriff. Die Freilauf-Riemenscheibe 25 ist dann von der Generatormasse abgekuppelt und kann ihre normale Funktion erfüllen.

Die Grenzdrehzahl kann dabei so gewählt werden, dass sie knapp unter der Leerlaufdrehzahl der Brennkraftmaschine liegt. Dies stellt sicher, dass im Normalbetrieb die Fliehkraftkupplung 33 immer entriegelt ist. Nach dem Ausschalten der Brennkraftmaschine verringert sich die Drehzahl der Kurbelwelle und damit des Außenrings 35 schnell. Die Drehzahl des Innenrings 34 mit den Klinken 39 fällt langsamer. Fällt dessen Drehszahl schließlich unter die Grenzdrehzahl, erfolgt dann schlagartig die erneute Verriegelung mit dem Außenring 35.

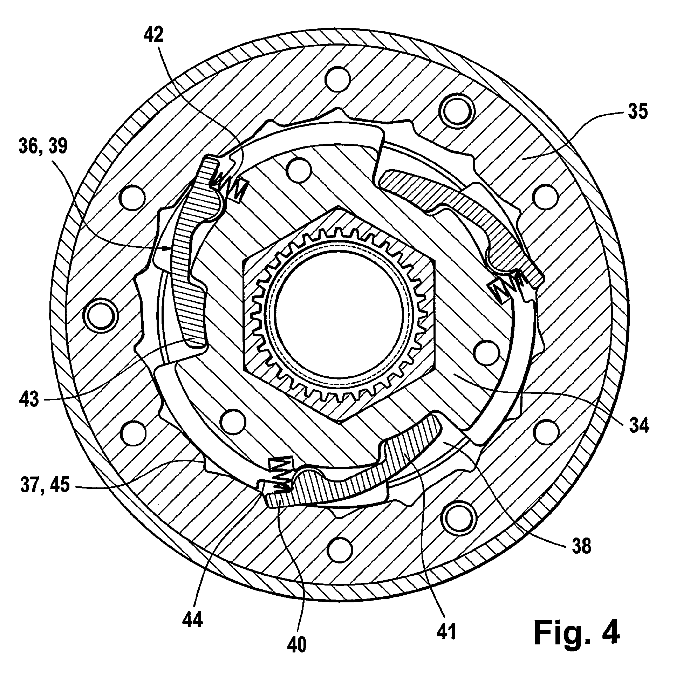

Um die Abstimmung der Masse der Klinken 39, der Länge der kurzen Hebel 40 und langen Hebel 41 und des Federelements 42 zu erleichtern, lassen sich zwei Zusatzmaßnahmen vorsehen. Zum einen kann am langen Hebel 41 eine Zusatzmasse 43 angeordnet sein, die die Wirkung der Fliehkraft erhöht. Das Material und die Form der Zusatzmasse 43 können dabei den Gegebenheiten beliebig angepasst werden. Zum anderen können die Positionen, die der lange Hebel 41 oder der kurze Hebel 40 bei unterschiedlichen Drehzahlen einnehmen durch Vorsprünge 44 (Figuren 3a und 4) begrenzt werden. Dies stellt sicher, dass insbesondere bei hohen Drehzahlen der lange Hebel 41 nicht so weit nach außen bewegt wird, dass er mit dem Außenring 35 in Kontakt gerät und damit Geräusche und Verschleiß verursacht.

### Bezugszahlenliste

- 1: Eingangswelle
- 2: Riemenscheibe
- 3: Armierungsring
- 4: Bohrung
- 5: Freilaufkupplung
- 6: Zylinderrollenlager
- 7: Zylinderrollenlager
- 8: Lageraußenring
- 9: Lagerinnenring
- 10: Klemmrolle
- 11: Käfig
- 12: Bord
- 13: Anlaufscheibe
- 14: Schulter
- 15: Längsnut
- 16: Nabe
- 17: erster Bord
- 18: zweiter Bord
- 19: Käfig
- 20: Radialdichtring
- 21: Innengewinde
- 22: Vielzahnprofil
- 23: Deckel
- 24: Rand
- 25: Riemenscheibe
- 26: Nabe
- 27: Freilaufkupplung
- 28: Lageraußenring
- 29: Lagerinnenring
- 30: Klemmrolle
- 31: Wälzlager
- 32: Wälzlager
- 33: Fliehkraftkupplung
- 34: Innenring
- 35: Außenring
- 36: Verriegelungselement
- 37: Verriegelungsaufnahme
- 38: Ausnehmung
- 39: Klinken
- 40: kurzer Hebel
- 41: langer Hebel
- 42: Federelement
- 43: Zusatzmasse
- 44: Vorsprung
- 45: Zähne

## Patentansprüche

1. Vorrichtung zur Dämpfung von Drehschwingungen in einem Antriebsstrang, insbesondere in einem Zugmitteltrieb einer Hubkolbenbrennkraftmaschine für deren Zusatzaggregate, mit einer Freilaufkupplung (27), die zwischen einer Riemenscheibe (25) und einer Nabe (26) eines Rotors angeordnet ist, wobei die Nabe (26) mit einer Eingangswelle (1) eines Zusatzaggregats und die Riemenscheibe (25) über ein Zugmittel mit einer Kurbelwelle verbunden sind, und wobei die Freilaufkupplung (27) einen die Nabe (26) umgebenden und an dieser befestigten Innenring (34) und einen den Innenring (34) mit radialem Spiel umgebenden, an der Riemenscheibe (25) befestigten Außenring (35) aufweist, **dadurch gekennzeichnet, dass** im Innenring (34) mindestens ein fliehkraftabhängig betätigtes Verriegelungselement (36) und im Außenring (35) mindestens eine Verriegelungsaufnahme (37) angeordnet sind.

2. Vorrichtung nach Anspruch 1, **dadurch gekennzeichnet, dass** die Verriegelungsaufnahmen (37) und die Verriegelungselemente (36) an dem Außenring (35) bzw. an dem Innenring (34) in Umfangsrichtung in gleichmäßigen Abständen hintereinander angeordnet sind.

3. Vorrichtung nach Anspruch 1, **dadurch gekennzeichnet, dass** im Ruhezustand alle Verriegelungselemente (36) in den Verriegelungsaufnahmen (37) angeordnet sind.

4. Vorrichtung nach Anspruch 1, **dadurch gekennzeichnet, dass** die Vorrichtung zur Dämpfung von Drehschwingungen in einem Starter-Generator-Trieb vorgesehen ist.

5. Vorrichtung nach Anspruch 1, **dadurch gekennzeichnet, dass** die Verriegelungselemente (36) als Klinken (39) ausgebildet sind, die jeweils durch ihre Lagerungen einen kurzen Hebel (40) und einen langen Hebel (41) aufweisen, wobei zwischen Innenring (34) und dem kurzen Hebel (40) ein in Richtung Außenring (35) wirkendes Federelement (42) angeordnet ist.

6. Vorrichtung nach Anspruch 5, **dadurch gekennzeichnet, dass** die Klinken (39) in ihrem längeren Hebel (41) eine Zusatzmasse (43) aufweisen.

7. Vorrichtung nach Anspruch 5, **dadurch gekennzeichnet, dass** auf der Seite des langen Hebels (41) radial außen am Innenring (34) ein den langen Hebelweg begrenzender Vorsprung (44) angeordnet ist.

8. Vorrichtung nach Anspruch 5, **dadurch gekennzeichnet, dass** auf der Seite des kurzen Hebels (41) radial innen am Innenring (34) ein den kurzen Hebelweg begrenzender Vorsprung (44) angeordnet ist.

9. Vorrichtung nach Anspruch 1, **dadurch gekennzeichnet, dass** die Verriegelungsaufnahmen (37) als gleichmäßig am Umfang des Außenrings angeordnete Zähne (45) ausgebildet sind.

10. Vorrichtung nach Anspruch 8, **dadurch gekennzeichnet, dass** Anzahl der Zähne (45) ein ganzzahliges Vielfaches der Verriegelungselementanzahl ist.

## Claims

1. Device for damping rotary oscillations in a drivetrain, in particular in a traction mechanism drive of a reciprocating-piston internal combustion engine for the auxiliary units thereof, having an overrunning clutch (27) which is arranged between a pulley (25) and a hub (26) of a rotor, with the hub (26) being connected to an input shaft (1) of an auxiliary unit and with the pulley (25) being connected via a traction mechanism to a crankshaft, and with the overrunning clutch (27) having an inner ring (34), which surrounds and is fastened to the hub (26), and an outer ring (35) which surrounds the inner ring (34) with radial play and which is fastened to the pulley (25), **characterized in that** at least one locking element (36) which is actuated by centrifugal force is arranged in the inner ring (34) and at least one locking receptacle (37) is arranged in the outer ring (35).

2. Device according to Claim 1, **characterized in that** the locking receptacles (37) and the locking elements (36) on the outer ring (35) and on the inner ring (34) are arranged in series at uniform intervals in the circumferential direction.

3. Device according to Claim 1, **characterized in that,** in the rest state, all the locking elements (36) are arranged in the locking receptacles (37).

4. Device according to Claim 1, **characterized in that** the device for damping rotary oscillations is provided in a starter-generator drive.

5. Device according to Claim 1, **characterized in that** the locking elements (36) are embodied as pawls (39) which each have one short lever (40) and one long lever (41) as a result of their mounting, with a spring element (42) which acts in the direction of the outer ring (35) being arranged between the inner ring (34) and the short lever (40).

6. Device according to Claim 5, **characterized in that** the pawls (39) have an additional mass (43) in their longer lever (41).

7. Device according to Claim 5, **characterized in that,** on the side of the long lever (41), a projection (44) which delimits the long lever travel is arranged radially at the outside on the inner ring (34).

8. Device according to Claim 5, **characterized in that,** on the side of the short lever (40), a projection (44) which delimits the short lever travel is arranged radially at the inside on the inner ring (34).

9. Device according to Claim 1, **characterized in that** the locking receptacles (37) are formed as teeth (45) which are arranged uniformly on the periphery of the outer ring.

10. Device according to Claim 8, **characterized in that** the number of teeth (45) is an integer multiple of the number of locking elements.

## Revendications

1. Dispositif pour amortir des vibrations torsionnelles dans une chaîne de transmission, en particulier dans une transmission à courroie d'un moteur à combustion interne à piston alternatif, pour ses unités auxiliaires, comprenant un accouplement de roue libre (27) qui est disposé entre une poulie à courroie (25) et un moyeu (26) d'un rotor, le moyeu (26) étant connecté à un arbre d'entrée (1) d'une unité auxiliaire et la poulie à courroie (25) étant connectée à un vilebrequin par le biais d'une courroie, l'accouplement de roue libre (27) présentant une bague intérieure (34) entourant le moyeu (26) et fixée sur celui-ci et une bague extérieure (35) entourant la bague intérieure (34) avec un jeu radial, fixée sur la poulie à courroie (25), **caractérisé en ce que** l'on dispose dans la bague intérieure (34) au moins un élément de verrouillage (36) actionné en fonction de la force centrifuge et dans la bague extérieure (35) au moins un logement de verrouillage (37).

2. Dispositif selon la revendication 1, **caractérisé en ce que** les logements de verrouillage (37) et les éléments de verrouillage (36) sont disposés les uns derrière les autres à intervalles réguliers dans la direction périphérique sur la bague extérieure (35), respectivement sur la bague intérieure (34).

3. Dispositif selon la revendication 1, **caractérisé en ce que,** dans l'état de repos, tous les éléments de verrouillage (36) sont disposés dans les logements de verrouillage (37).

4. Dispositif selon la revendication 1, **caractérisé en ce que** le dispositif est prévu pour l'amortissement de vibrations torsionnelles dans une transmission de générateur de démarrage.

5. Dispositif selon la revendication 1, **caractérisé en ce que** les éléments de verrouillage (36) sont réalisés sous forme de cliquets (39) qui présentent chacun, du fait de leurs supports, un levier court (40) et un levier long (41), un élément de ressort (42) agissant dans la direction de la bague extérieure (35) étant disposé entre la bague intérieure (34) et le levier court (40).

6. Dispositif selon la revendication 5, **caractérisé en ce que** les cliquets (39) présentent, dans leur levier plus long (41), une masse supplémentaire (43).

7. Dispositif selon la revendication 5, **caractérisé en ce que,** du côté du levier long (41), radialement à l'extérieur sur la bague intérieure (34) est disposée une saillie (44) limitant la course du levier long.

8. Dispositif selon la revendication 5, **caractérisé en ce que,** du côté du levier court (41), radialement à l'intérieur sur la bague intérieure (34), est disposée une saillie (44) limitant la course du levier court.

9. Dispositif selon la revendication 1, **caractérisé en ce que** les logements de verrouillage (37) sont réalisés sous forme de dents (45) disposées uniformément sur la périphérie de la bague extérieure.

10. Dispositif selon la revendication 8, **caractérisé en ce que** le nombre des dents (45) est un multiple entier du nombre des éléments de verrouillage.
